# EUROPEAN PATENT SPECIFICATION

(11) **EP 4 296 131 B1**
(45) Date of publication and mention of the grant of the patent: **17.12.2025**
(21) Application number: 21926393.6
(22) Date of filing: 31.12.2021
(51) Int. Cl.: B60W 20/15, B60W 10/06, B60W 10/08, B60W 10/02, B60W 10/18

(54) **ENGINE STARTING CONTROL METHOD, ENGINE CONTROL UNIT AND STORAGE MEDIUM**
MOTORSTARTSTEUERUNGSVERFAHREN, MOTORSTEUEREINHEIT UND SPEICHERMEDIUM
PROCÉDÉ DE COMMANDE DE DÉMARRAGE DE MOTEUR, UNITÉ DE COMMANDE DU MOTEUR ET SUPPORT D'ENREGISTREMENT

(30) Priority: 18.02.2021 CN 202110190188
(43) Date of publication of application: 27.12.2023
(73) Proprietor: Great Wall Motor Company Limited, Hebei 071000 (CN)
(72) Inventor: CHANG, Xiao, Baoding, Hebei 071000 (CN)
(74) Representative: dompatent
(86) International application number: PCT/CN2021/143640
(87) International publication number: WO 2022/174681

(56) References cited:
- EP-A2- 1 717 084
- WO-A1-2020/224899
- CN-A- 108 327 701
- CN-A- 109 538 752
- CN-A- 112 253 308
- US-A1- 2015 066 264
- US-A1- 2015 360 676
- US-A1- 2016 016 580
- US-A1- 2019 168 731

## Description

### TECHNICAL FIELD

The present invention claims the priority of the Chinese patent application filed on February 18th, 2021 before the Chinese Patent Office with the application number of 202110190188.0 and the title of "METHOD FOR CONTROLLING STARTING OF ENGINE'.

The present invention relates to the technical field of engine control and, more particularly, to a method for controlling starting of an engine. The present invention further relates to an engine control unit and a storage medium.

### BACKGROUND

With the progress and development of society, the issue of environmental protection and energy crisis are receiving increasing attention from people. Since hybrid power vehicles have important advantages in terms of energy saving and environment protection, they have become an important direction for the development of the automobile industry.

With the rapid development of hybrid power vehicles, a vehicle with a relatively new power architecture is a P2-architecture hybrid power vehicle, which mainly includes the components for example an engine, a P2 electric motor, a hydraulic torque converter and an AT-gearbox and the like. Generally, the P2-architecture hybrid power vehicles may perform energy recovery in the process of sliding and braking, and during energy recovery, starting the engine is one of the key technologies of the hybrid power vehicle.

In the conventional technology, during the energy recovery process, for the P2-architecture hybrid power vehicles, the engine start is forbidden or the engine start caused by driver's operation is reduced. However, the engine does not start in the energy recovery process may bring the following adverse factors:

(1) Under the condition that the vehicle is sliding downhill, and the engine does not start, the vehicle may not be braked by anti-drag force of the engine, and the driving safety is affected.

(2) Under the condition that the electric quantity of the high-voltage battery is low to a certain limit, and the engine does not start, the electric motor may not be driven to generate electricity to charge the high-voltage battery, which may easily cause risk of power shortage of the high-voltage battery.
EP 1 717 084 A2 discloses a system and method for transitioning from motor regenerative braking to engine braking in a hybrid vehicle. During regenerative braking, the battery is charged, and the transition is triggered when the state of charge (SOC) of the battery reaches or exceeds its upper limit.

### SUMMARY

In view of the this, the present invention aims to provide a method for controlling starting of an engine, to improve the driving safety of P2-architecture power vehicles. This is achieved through the features of the independent patent claims, with advantageous embodiments specified in the dependent patent claims.

In order to achieve the above-mentioned purpose, the technical solutions of the present invention are realized as follows:

A method for controlling starting of an engine, wherein the method for controlling starting of an engine is configured for controlling starting of the engine in an energy recovery process of a P2-architecture hybrid power vehicle, and the method for controlling starting of the engine includes:
step a: according to a starting preparation activation signal of a vehicle control unit, controlling, by an engine control unit, a fuel oil pump to operate to establish an oil pressure, controlling, by a vehicle body electronic stability system, to increase the pressure for braking to make a vehicle deceleration unchanged, and, by an AT-gearbox control unit, controlling a lock-up clutch to open and a K0 clutch to enter a torque control state;
step b: according to an torque demand signal of the vehicle control unit, controlling, by a P2 electric motor control unit and the AT-gearbox control unit, a rotate speed of a P2 electric motor and a rotate speed of the engine to be synchronized, and after the rotate speed of the P2 electric motor and the rotate speed of the engine are synchronous, controlling, by the AT-gearbox control unit, the K0 clutch to be closed, and, by the engine control unit, according to an engine starting activation signal of the vehicle control unit, controlling the engine to ignite, and activating an engine torque architecture; and
step c: by the vehicle control unit, increasing a torque demand of the engine according to a torque demand of a driver, and reducing a torque demand of the P2 electric motor according to an actual torque of the engine, and, by the AT-gearbox control unit, controlling the lock-up clutch to be closed according to a vehicle control unit signal.

Further, in the step a, the step of controlling, by the engine control unit, the fuel oil pump to operate to establish the oil pressure includes:
sending, by the vehicle control unit, a starting preparation activation instruction signal to the engine control unit, and, by the engine control unit, according to the received starting preparation activation instruction signal, controlling the fuel oil pump to operate to establish the oil pressure.

Additionally the step a includes, the step of controlling, by the vehicle body electronic stability program, to increase the pressure for braking to make the vehicle deceleration unchanged includes:
by the vehicle control unit, increasing a recovery torque demand of the P2 electric motor to 0Nm, and sending a hydraulic compensation torque demand signal to the vehicle body electronic stability system; and
by the vehicle body electronic stability program, according to the received hydraulic compensation torque demand signal, controlling to increase the hydraulic for braking to ensure that the vehicle deceleration unchanged.

Further, in the step a, the step of, by the AT-gearbox control unit, controlling the lock-up clutch to open includes:
sending, by the vehicle control unit, the starting preparation activation instruction signal to the AT-gearbox control unit;
sending, by the vehicle control unit, an opening state request signal of the lock-up clutch to the AT-gearbox control unit;
by the AT-gearbox control unit, according to the received starting preparation activation instruction signal and opening state request signal of the lock-up clutch, controlling the lock-up clutch to open.

Further, in the step a, after the lock-up clutch is opened, the step of, by the AT-gearbox control unit, controlling the K0 clutch to enter the torque control state includes:
sending, by the vehicle control unit, a torque control demand signal of the K0 clutch and a zero-torque demand signal of the K0 clutch to the AT-gearbox control unit; and
by the AT-gearbox control unit, according to the received torque control demand signal of the K0 clutch, controlling the K0 clutch to be pre-filled with oil, and after the 0 clutch is pre-filled with oil, controlling the K0 clutch to enter the torque control state.

Additionally the step b includes, the step of controlling, by the P2 electric motor control unit and the AT-gearbox control unit, the rotate speed of the P2 electric motor and the rotate speed of the engine to be synchronized includes:
sending, by the vehicle control unit, a torque demand signal of the K0 clutch to the AT-gearbox control unit, and sending a torque demand of the electric motor to the P2 electric motor control unit;
by the AT-gearbox control unit, according to the received torque demand signal of the K0 clutch, controlling the torque of the K0 clutch to increase with the torque demand of the K0 clutch, and feeding back an actual torque value of the K0 clutch to the vehicle control unit;
by the P2 electric motor control unit, according to the received torque demand signal of the electric motor, controlling the torque of the P2 electric motor to increase with the torque demand of the P2 electric motor to compensate for the torque of the K0 clutch; and
by the P2 electric motor, dragging the engine by means of the K0 clutch (2), till the rotate speed of the P2 electric motor and the rotate speed of the engine are synchronous.

Further, the method further includes:
when the lock-up clutch is opened, by the vehicle control unit, controlling the rotate speed of the P2 electric motor to be not greater than a rotate speed of a turbine inside a hydraulic torque converter.

Further, the method further includes:
when the P2 electric motor drags the engine by means of the K0 clutch, under the condition that the P2 electric motor drags the rotate speed of the engine to a preset rotate speed threshold, reducing the torque demand of the P2 electric motor to ONm according to a preset slope threshold.

Further, in the step b, the step of controlling, by the AT-gearbox control unit, the K0 clutch to be closed includes:
when the rotate speed of the P2 electric motor and the rotate speed of the engine are synchronous, sending, by the vehicle control unit, a closing demand signal of the K0 clutch to the AT-gearbox control unit; and
by the AT-gearbox control unit, according to the received closing demand signal of the K0 clutch, controlling the K0 clutch to be closed, and feeding back an actual closing state signal of the K0 clutch to the vehicle control unit.

Further, in the step b, after the K0 clutch is closed, the step of, by the engine control unit, controlling the engine to ignite, and activating the engine torque architecture includes:
by the vehicle control unit, according to the received actual closing state signal of the K0 clutch, sending an engine starting activation instruction signal to the engine control unit; and
by the engine control unit, according to the received engine starting activation instruction signal, controlling the engine to ignite, and activating the engine torque architecture.

Further, the method further includes:
in the step c, after the engine torque architecture is activated, resetting, by the vehicle control unit, the starting preparation activation signal and the engine starting activation signal.

Further, in the step c, the step of, by the AT-gearbox control unit, controlling the lock-up clutch to be closed according to the signal of the vehicle control unit includes:
after the engine torque architecture is activated, sending, by the vehicle control unit, a no-demand state request signal of the lock-up clutch to the AT-gearbox control unit; and
by the AT-gearbox control unit, controlling the lock-up clutch to be closed after receiving the no-demand state request signal of the lock-up clutch.

Further, the method further includes:
by the AT-gearbox control unit, controlling the lock-up clutch to be closed according to a lock-up line of the lock-up clutch.

As compared with the general technologies, the present invention has the following advantages:
In the method for controlling starting of an engine according to the present invention, by the information interaction among the vehicle control unit, the engine control unit, the vehicle body electronic stability system, the AT-gearbox control unit and the P2 electric motor control unit, in the energy recovery process of the vehicle, when the driver operation results in the starting-up of the engine is started due to an operation of a driver, firstly, the vehicle will exit the energy recovery process, and the engine is started subsequently, so that the control of starting the engine in the energy recovery process is realized, thereby the driving safety is improved, and the power shortage risk of the high-voltage battery is reduced.

The present invention further provides an engine control unit, wherein the engine control unit includes a processor, a memory, and a computer program that is stored in the memory and executable in the processor; and
when the computer program is executed by the processor, the engine control unit implements the method for controlling starting of the engine stated above.

The present invention further provides a computer-readable storage medium in which a computer program is stored, wherein the computer program, when executed by a processor, the method for controlling starting of the engine stated above is implemented.

### BRIEF DESCRIPTION OF THE DRAWINGS

The drawings, which constitute a portion of the present invention, are intended to provide a further understanding of the present invention. The illustrative embodiments of the present invention and their explanation are intended to interpret the present invention, and do not inappropriately limit the present invention. In the drawings:
FIG. 1 is a structural schematic diagram of a powertrain of the P2-architecture hybrid power vehicle according to an embodiment of the present invention; and
FIG. 2 is a schematic diagram of the control logic of a starting process of the engine according to the present invention.

### Description of the reference numbers:

1. engine; 2. K0 clutch; 3. P2 electric motor; 4. lock-up clutch; 5. hydraulic torque converter; 6. AT gearbox; 7. AT-gearbox control unit; 8. P2 electric motor control unit.

### DETAILED DESCRIPTION

It should be noted that, subject to the avoiding of any conflict, the embodiments and the features of the embodiments of the present invention may be combined.

In the description of the present invention, unless expressly defined otherwise, the terms "mount", "link", "connect" and "connector" should be interpreted broadly. For example, it may be fixed connection, detachable connection, or integral connection; it may be mechanical connection or electrical connection; and it may be direct connection or indirect connection by an intermediate medium, and may be the internal communication between two elements. For a person skilled in the art, the particular meanings of the above terms in the present invention may be comprehended according to particular situations.

The present invention will be described in detail below with reference to the drawings and the embodiments.

The present embodiment relates to a method for controlling starting of an engine, which is particularly suitable for P2-architecture hybrid power vehicles. It aims at, by the information interaction among controllers of this vehicle model, realizing starting the engine 1 in the energy recovery process of the vehicle, thereby overcoming the adverse affection caused by incapacity of starting of the engine in the general technologies, and improving the driving safety of the P2-architecture hybrid power vehicle.

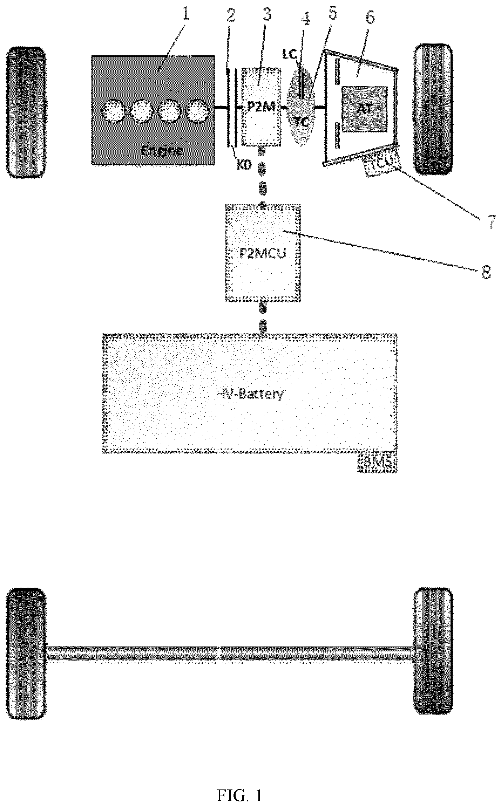

Based on the design concept stated above, and in order to facilitate to comprehend the method for controlling starting of the engine according to the present invention, firstly, the structure of the powertrain of the P2-architecture hybrid power vehicle will be described briefly below with reference to FIG. 1. The powertrain of the P2-architecture hybrid power vehicle mainly includes an engine 1, a P2 electric motor 3, and a K0 clutch 2 connected between the engine 1 and the P2 electric motor 3, and further includes an AT gearbox 6, and a lock-up clutch 4 (LC) and a hydraulic torque converter 5 (TC) that are connected between the P2 electric motor 3 and the AT gearbox 6.

To facilitate control, a control system of the P2-architecture hybrid power vehicle mainly includes a vehicle control unit (HCU) as a core control component of the vehicle, an engine control unit (ECU) for controlling the engine 1, a P2 motor control unit 8 (P2MCU) for controlling the P2 electric motor 3, an AT-gearbox control unit 7 (TCU) for controlling the AT gearbox 6, and a vehicle body electronic stability program (ESP).

In the present invention, all of the connect relations and the arrangement modes of the component parts of the power assembly and the connect relations and the arrangement modes of the controllers may refer to the general technologies, and are not described in detail in the present invention.

Based on the simple knowledge on the power system and the control system of the P2-architecture hybrid power vehicle, the method for controlling starting of the engine according to the present invention will be described below. In the overall design, the method for controlling starting of the engine according to the present invention is configured for controlling the starting of the engine 1 in the energy recovery process of a P2-architecture hybrid power vehicle, and mainly includes the following three steps:

The step a is a preparation stage of the starting of the engine 1. In this step, it is required to, according to a starting preparation activation signal sent by a vehicle control unit, control, by an engine control unit, a fuel oil pump to operate to establish an oil pressure, control, by a vehicle body electronic stability program, to increase a hydraulic pressure for braking, and ensure that the vehicle deceleration unchanged. An AT-gearbox control unit 7 is required to control a lock-up clutch 4 to open, and the AT-gearbox control unit 7 is required to control a K0 clutch 2 to enter a torque control state.

The step b is a starting process of the engine 1. In this step, it is required to, according to a torque demand signal of the vehicle control unit, control, by a P2 electric motor control unit 8, the rotate speed of a P2 electric motor 3, and control, by the AT-gearbox control unit 7, the rotate speed of the engine 1, to control the rotate speed of the P2 electric motor 3 and the rotate speed of the engine 1 to be synchronized. Furthermore, after the rotate speed of the P2 electric motor 3 and the rotate speed of the engine 1 are synchronous, the AT-gearbox control unit 7 is required to control the K0 clutch 2 to be closed, and the engine control unit, according to an engine starting activation signal of the vehicle control unit, controls the engine 1 to ignite, and activates an engine torque architecture.

The step c is a control stage of the lock-up clutch 4. In this step, the vehicle control unit is required to increase the torque demand of the engine 1 according to the torque demand of a driver, and reduce the torque demand of the P2 electric motor 3 according to an actual torque of the engine 1. Moreover, the AT-gearbox control unit 7, according to a signal of the vehicle control unit, controls the lock-up clutch 4 to be closed.

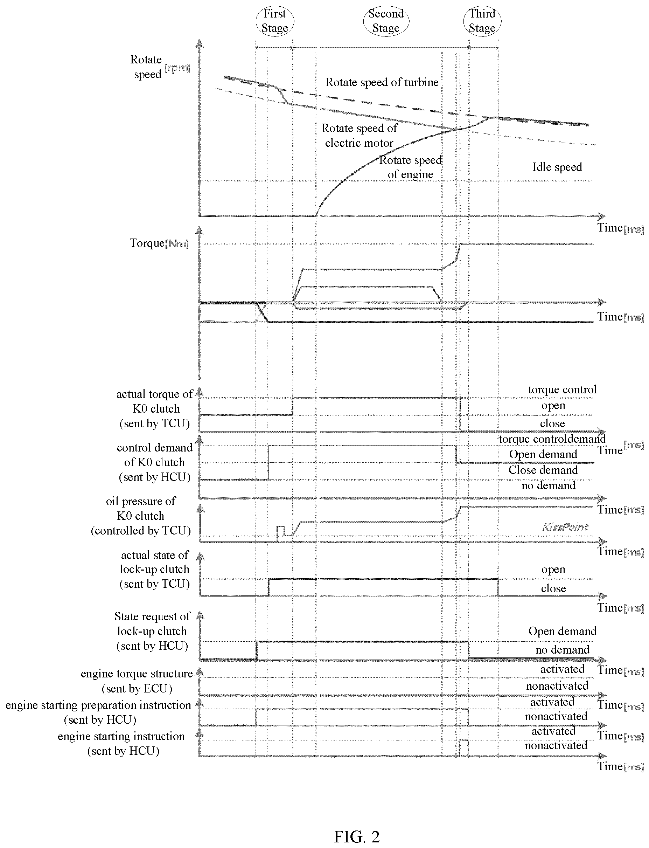

Based on the design purposes and demands stated above, as shown in FIGS. 1 and 2, the particular method for controlling the starting of the engine 1 according to the present invention is as follows:

At the first stage, i.e., the preparation stage of the starting of the engine 1, the step a particularly includes the following steps:
a.1: Firstly, sending, by the vehicle control unit, a starting preparation activation instruction signal to the AT-gearbox control unit 7 and the engine control unit respectively.
a.2: By the vehicle control unit, increasing a recovery torque demand of the P2 electric motor 3 to 0Nm, and sending a hydraulic compensation torque demand signal to the vehicle body electronic stability program.
a.3: Sending, by the vehicle control unit, an opening state request signal of the lock-up clutch 4 to the AT-gearbox control unit 7.
a.4: By the AT-gearbox control unit 7, according to the received starting preparation activation instruction signal and opening state request signal of the lock-up clutch 4, controlling the lock-up clutch 4 to open. In this step, by opening the lock-up clutch 4, the problem of starting shock in the process of the electric motor dragging the engine 1 to start may be effectively avoided.
a.5: By the engine control unit, according to the received starting preparation activation instruction signal, controlling the fuel-oil pump to operate to establish the oil pressure.
a.6: By the vehicle body electronic stability program, according to the received liquid pressure compensation torque demand signal, controlling to increase the hydraulic pressure for braking to ensure that the vehicle deceleration unchanged.
a.7: After the AT-gearbox control unit 7 controls the lock-up clutch 4 to open, sending, by the vehicle control unit, a torque control demand signal of the K0 clutch 2 and a zero-torque demand signal of the K0 clutch 2 to the AT-gearbox control unit 7.
a.8: By the AT-gearbox control unit 7, according to the received torque control demand signal of the K0 clutch 2, controlling the K0 clutch 2 to be pre-filled with oil, and after the K0 clutch 2 is pre-filled with oil, controlling the K0 clutch 2 to enter the torque control state.

At the second stage, i.e., the starting stage of the engine 1, the step b particularly includes the following steps:
b.1: After the lock-up clutch 4 is opened and the K0 clutch 2 enters the torque control state, by the vehicle control unit, sending a torque demand signal of the K0 clutch 2 to the AT-gearbox control unit 7, and simultaneously sending a torque demand of the electric motor to the P2 electric motor control unit 8.
b.2: In the whole process of opening the lock-up clutch 4, by the vehicle control unit, controlling the rotate speed of the P2 electric motor 3 to be not greater than a rotate speed of a turbine inside a hydraulic torque converter 5, which can effectively prevent acceleration of the vehicle.
b.3: By the AT-gearbox control unit 7, according to the received torque demand signal of the K0 clutch 2, controlling the torque of the K0 clutch 2 to increase with the torque demand of the K0 clutch 2, and feeding back an actual torque value of the K0 clutch 2 to the vehicle control unit.
b.4: By the P2 electric motor control unit 8, according to the received torque demand signal of the electric motor, controlling the torque of the P2 electric motor 3 to increase with the torque demand of the P2 electric motor 3 to compensate for the torque of the K0 clutch 2.
b.5: By the P2 electric motor 3, dragging the engine 1 by means of the K0 clutch 2, till the rotate speed of the P2 electric motor 3 and the rotate speed of the engine 1 are synchronous. Particularly, the P2 electric motor 3 drags the engine 1 by means of the K0 clutch 2, and after the P2 electric motor 3 drags the rotate speed of the engine 1 to a preset rotate speed threshold, or, in other words, after the rotate speed of the engine 1 is dragged to a certain preset rotate speed, the vehicle control unit is required to reduce the torque demand of the P2 electric motor 3 to ONm according to a preset slope threshold, which may effectively prevent the rotate speed of the engine 1 from being dragged excessively high.
b.6: When the rotate speed of the P2 electric motor 3 and the rotate speed of the engine 1 are synchronous, sending, by the vehicle control unit, a closing demand signal of the K0 clutch 2 to the AT-gearbox control unit 7.
b.7: By the AT-gearbox control unit 7, after receiving the demand signal of the K0 clutch 2, controlling the K0 clutch 2 to be closed, and feeding back an actual closing-state signal of the K0 clutch 2 to the vehicle control unit.
b.8: By the vehicle control unit, according to the received actual closing state signal of the K0 clutch 2, sending an engine starting activation instruction signal to the engine control unit.
b.9: By the engine control unit, according to the received engine starting activation instruction signal, controlling the engine 1 to ignite, and activating the engine torque architecture.

At the third stage, i.e., the control stage of the lock-up clutch 4, the step c particularly includes the following steps:
c.1: After the engine torque architecture is activated, resetting, by the vehicle control unit, the starting preparation activation instruction and the starting activation instruction, and, according to the torque demand of a driver, increasing the torque demand of the engine 1, wherein torque demand of the driver may particularly be realized by switching driving modes.
c.2: By the vehicle control unit, according to an actual torque of the engine 1, reducing the torque demand of the electric motor.
c.3: After the engine torque architecture is activated, sending, by the vehicle control unit, a no-demand state request signal of the lock-up clutch 4 to the AT-gearbox control unit 7.
c.4: By the AT-gearbox control unit 7, according to a lock-up line of the lock-up clutch 4, controlling the lock-up clutch 4 to be closed after receiving the no-demand state request signal of the lock-up clutch 4.

In the method for controlling starting of an engine according to the present invention, in the process of the starting of the engine 1 in the energy recovery process of the P2-architecture hybrid power vehicle, the reason why the engine 1 is smoothly started is that, by controlling the logic interaction strategy among the vehicle control unit, the AT-gearbox control unit 7, the engine control unit, the vehicle body electronic stability program and the P2 electric motor control unit 8, before the engine 1 is started, the vehicle control unit is used for controlling the recovery torque of the P2 electric motor 3 to exit, request the vehicle body electronic stability program to establish the hydraulic brake, and ensure that the entire vehicle deceleration does not change, so that the engine 1 may be started smoothly, thereby adverse factors caused by the engine 1 does not start may be avoided, and the driving safety of the P2-architecture hybrid power vehicle is effectively improved.

An embodiment of the present invention further relates to an engine control unit, wherein the engine control unit includes a processor, a memory, and a computer program that is stored in the memory and executable in the processor; and when the computer program is executed by the processor, the engine control unit implements the method for controlling starting-up of an engine stated above.

The engine control unit according to the present embodiment may generally be an engine ECU, in which the processor may, for example, be a microprocessor or a digital signal processor, and the memory may be an electronic memory for example a flash memory, an electronic memory for example an Electrically Erasable Programmable Read-Only Memory (EEPROM) and an EPROM and the like. The memory has a storage space for the computer program.

Furthermore, an embodiment of the present invention further relates to a computer-readable storage medium, storing a computer program, wherein the computer program, when executed by a processor, the method for controlling starting-up of an engine stated above is implemented.

In this case, a general example of the computer-readable medium is a memory. Furthermore, the computer-readable medium includes permanent or non-permanent, and movable or immovable media, and may realize the information storage by using any method or technology.

The information may be a computer-readable instruction, a data structure, a program module and other data. The examples of the computer-readable storage medium include but are not limited to a phase change random access memory (PRAM), a static random access memory (SRAM), a dynamic random access memory (DRAM), another types of random access memories (RAM), a read-only memory (ROM), an electrically erasable programmable read-only memory (EEPROM), a flash memory, another internal memory technologies, a Compact Disc Read-Only Memory (CD-ROM), a Digital Versatile Disc (DVD), another optical storage, a magnetic cassette tape, a magnetic-disk storage, another magnetic storage apparatuses, or any other non-transmission media, and it may be used for storing information that may be accessed by a computing apparatus.

## Claims

1. A method for controlling starting of an engine, whereby
the method for controlling starting of the engine is configured for controlling starting of the engine (1) in an energy recovery process of a P2-architecture hybrid power vehicle, and the method for controlling starting of the engine being **characterized in that**:
step a: according to a starting preparation activation signal of a vehicle control unit, controlling, by an engine control unit, a fuel oil pump to operate to establish an oil pressure, controlling, by a vehicle body electronic stability program, to increase the pressure for braking to make a vehicle deceleration unchanged, and, by an AT-gearbox control unit (7), controlling a lock-up clutch (4) to open and a K0 clutch (2) to enter a torque control state;
step b: according to a torque demand signal of the vehicle control unit, controlling, by a P2 electric motor control unit (8) and the AT-gearbox control unit (7), a rotate speed of a P2 electric motor (3) and a rotate speed of the engine (1) to be synchronized, and after the rotate speed of the P2 electric motor (3) and the rotate speed of the engine (1) are synchronous, controlling, by the AT-gearbox control unit (7), the K0 clutch (2) to be closed, and, by the engine control unit, according to an engine starting activation signal of the vehicle control unit, controlling the engine (1) to ignite, and activating an engine torque architecture; and
step c: by the vehicle control unit, increasing a torque demand of the engine (1) according to a torque demand of a driver, and reducing a torque demand of the P2 electric motor (3) according to an actual torque of the engine (1), and, by the AT-gearbox control unit (7), controlling the lock-up clutch (4) to be closed according to a signal of the vehicle control unit,
wherein
in the step a, the step of controlling, by the vehicle body electronic stability program, to increase the pressure for braking to make the vehicle deceleration unchanged comprises:
by the vehicle control unit, increasing a recovery torque demand of the P2 electric motor (3) to 0Nm, and sending a hydraulic compensation torque demand signal to the vehicle body electronic stability program; and
by the vehicle body electronic stability program, according to the received hydraulic compensation torque demand signal, controlling to increase the hydraulic for braking to ensure that the vehicle deceleration unchanged;
in the step b, the step of controlling, by the P2 electric motor control unit (8) and the AT-gearbox control unit (7), the rotate speed of the P2 electric motor (3) and the rotate speed of the engine (1) to be synchronized comprises:
sending, by the vehicle control unit, a torque demand signal of the K0 clutch (2) to the AT-gearbox control unit (7), and sending a torque demand of the electric motor to the P2 electric motor control unit (8);
by the AT-gearbox control unit (7), according to the received torque demand signal of the K0 clutch (2), controlling the torque of the K0 clutch (2) to increase with the torque demand of the K0 clutch (2), and feeding back an actual torque value of the K0 clutch (2) to the vehicle control unit;
by the P2 electric motor control unit (8), according to the received torque demand signal of the electric motor, controlling the torque of the P2 electric motor (3) to increase with the torque demand of the P2 electric motor (3) to compensate for the torque of the K0 clutch (2); and
by the P2 electric motor (3), dragging the engine (1) by means of the K0 clutch (2), till the rotate speed of the P2 electric motor (3) and the rotate speed of the engine (1) are synchronous.

2. The method for controlling starting of the engine according to claim 1, **characterized in that**,
in the step a, the step of controlling, by the engine control unit, the fuel oil pump to operate to establish the oil pressure comprises:
sending, by the vehicle control unit, a starting preparation activation instruction signal to the engine control unit, and, by the engine control unit, according to the received starting preparation activation instruction signal, controlling the fuel oil pump to operate to establish the oil pressure.

3. The method for controlling starting of the engine according to claim 1, **characterized in that**,
in the step a, the step of, by the AT-gearbox control unit (7), controlling the lock-up clutch (4) to open comprises:
sending, by the vehicle control unit, the starting preparation activation instruction signal to the AT-gearbox control unit (7);
sending, by the vehicle control unit, an opening state request signal of the lock-up clutch-(4) to the AT-gearbox control unit (7);
by the AT-gearbox control unit (7), according to the received starting preparation activation instruction signal and opening state request signal of the lock-up clutch (4), controlling the lock-up clutch (4) to open.

4. The method for controlling starting of the engine according to claim 3, **characterized in that**,
in the step a, after the lock-up clutch (4) is opened, the step of, by the AT-gearbox control unit (7), controlling the K0 clutch (2) to enter the torque control state comprises:
sending, by the vehicle control unit, a torque control demand signal of the K0 clutch (2) and a zero-torque demand signal of the K0 clutch (2) to the AT-gearbox control unit (7); and
by the AT-gearbox control unit (7), according to the received torque control demand signal of the K0 clutch (2), controlling the K0 clutch (2) to be pre-filled with oil, and after the K0 clutch (2) is pre-filled with oil, controlling the K0 clutch (2) to enter the torque control state.

5. The method for controlling starting of the engine according to claim 1, **characterized in that**, the method further comprises:
when the lock-up clutch (4) is opened, by the vehicle control unit, controlling the rotate speed of the P2 electric motor (3) to be not greater than a rotate speed of a turbine inside a hydraulic torque converter (5).

6. The method for controlling starting of the engine according to claim 1, **characterized in that**, the method further comprises:
when the P2 electric motor (3) drags the engine (1) by means of the K0 clutch (2), under the condition that the P2 electric motor (3) drags the rotate speed of the engine (1) to a preset rotate speed threshold, reducing the torque demand of the P2 electric motor (3) to ONm according to a preset slope threshold.

7. The method for controlling starting of the engine according to claim 1, **characterized in that**,
in the step b, the step of controlling, by the AT-gearbox control unit (7), the K0 clutch (2) to be closed comprises:
when the rotate speed of the P2 electric motor (3) and the rotate speed of the engine (1) are synchronous, sending, by the vehicle control unit, a closing demand signal of the K0 clutch (2) to the AT-gearbox control unit (7); and
by the AT-gearbox control unit (7), according to the received closing demand signal of the K0 clutch (2), controlling the K0 clutch (2) to be closed, and feeding back an actual closing state signal of the K0 clutch (2) to the vehicle control unit.

8. The method for controlling starting of the engine according to claim 7, **characterized in that**,
in the step b, after the K0 clutch (2) is closed, the step of, by the engine control unit, controlling the engine (1) to ignite, and activating the engine torque architecture comprises:
by the vehicle control unit, according to the received actual closing state signal of the K0 clutch (2), sending an engine starting activation instruction signal to the engine control unit; and
by the engine control unit, according to the received engine starting activation instruction signal, controlling the engine (1) to ignite, and activating the engine torque architecture.

9. The method for controlling starting of the engine according to claim 1, **characterized in that**, the method further comprises:
in the step c, after the engine torque architecture is activated, resetting, by the vehicle control unit, the starting preparation activation signal and the engine starting activation signal.

10. The method for controlling starting of the engine according to claim 1, **characterized in that**,
in the step c, the step of, by the AT-gearbox control unit (7), controlling the lock-up clutch (4) to be closed according to the signal of the vehicle control unit comprises:
after the engine torque architecture is activated, sending, by the vehicle control unit, a no-demand state request signal of the lock-up clutch (4) to the AT-gearbox control unit (7); and
by the AT-gearbox control unit (7), controlling the lock-up clutch (4) to be closed after receiving the no-demand state request signal of the lock-up clutch (4).

11. The method for controlling starting of the engine according to any one of claims 1 to 10, **characterized in that**, the method further comprises:
by the AT-gearbox control unit (7), controlling the lock-up clutch (4) to be closed according to a lock-up line of the lock-up clutch.

12. An engine control unit, **characterized in** comprising
a processor, a memory, and a computer program that is stored in the memory and executable in the processor; and
when the computer program is executed by the processor, the engine control unit implements the method for controlling starting of the engine according to any one of claims 1-11.

13. A computer-readable storage medium in which a computer program is stored, **characterized in that**,
the computer program, when executed by a processor, the method for controlling starting of the engine according to any one of claims 1-11 is implemented.

## Patentansprüche

1. Verfahren zur Steuerung des Starts eines Motors, wobei
das Verfahren zur Steuerung des Starts des Motors dazu ausgebildet ist, den Start des Motors (1) in einem Energierückgewinnungsprozess eines Hybridfahrzeugs mit P2-Architektur zu steuern, und das Verfahren zur Steuerung des Starts des Motors die folgenden Schritte gekennzeichnet ist:
Schritt a: gemäß einem Startvorbereitungsaktivierungssignal einer Fahrzeugsteuereinheit, Steuern durch eine Motorsteuereinheit, dass eine Kraftstoffölpumpe betrieben wird, um einen Öldruck aufzubauen; Steuern durch ein elektronisches Stabilitätsprogramm der Fahrzeugkarosserie, dass der Bremsdruck erhöht wird, um eine Fahrzeugverzögerung unverändert zu belassen, und Steuern durch eine AT-Getriebesteuereinheit (7), dass eine Überbrückungskupplung (4) geöffnet wird und eine K0-Kupplung (2) in einen Drehmomentsteuerzustand eintritt;
Schritt b: Steuern einer Drehzahl eines P2-Elektromotors (3) und einer Drehzahl des Motors (1) durch eine Steuereinheit (8) für den P2-Elektromotor und die Steuereinheit (7) für das AT-Getriebe in Abhängigkeit von einem Drehmomentbedarfssignal der Fahrzeugsteuereinheit, um diese zu synchronisieren, und nachdem die Drehzahl des P2-Elektromotors (3) und die Drehzahl des Motors (1) synchronisiert sind, Steuern des Schließens der K0-Kupplung (2) durch die AT-Getriebesteuereinheit (7), und Steuern des Zündens des Motors (1) durch die Motorsteuereinheit gemäß einem Motorstartaktivierungssignal der Fahrzeugsteuereinheit und Aktivieren einer Motordrehmomentarchitektur; und
Schritt c: Erhöhen eines Drehmomentbedarfs des Motors (1) durch die Fahrzeugsteuereinheit entsprechend einem Drehmomentbedarf eines Fahrers und Verringern eines Drehmomentbedarfs des Elektromotors P2 (3) entsprechend einem tatsächlichen Drehmoment des Motors (1), und Steuern des Schließens der Überbrückungskupplung (4) durch die AT-Getriebesteuereinheit (7) entsprechend einem Signal der Fahrzeugsteuereinheit,
wobei
im Schritt a der Schritt der Steuerung durch das elektronische Stabilitätsprogramm der Fahrzeugkarosserie, um den Bremsdruck zu erhöhen, damit die Verzögerung des Fahrzeugs unverändert bleibt, umfasst:
durch die Fahrzeugsteuereinheit, Erhöhen eines Rückgewinnungsdrehmomentbedarfs des Elektromotors P2 (3) auf 0 Nm und Senden eines hydraulischen Kompensationsdrehmomentbedarfssignals an das elektronische Stabilitätsprogramm der Fahrzeugkarosserie; und
durch das elektronische Stabilitätsprogramm der Fahrzeugkarosserie entsprechend dem empfangenen Bedarfssignal für das hydraulische Kompensationsmoment, Steuern der Erhöhung der hydraulischen Bremskraft, um sicherzustellen, dass die Verzögerung des Fahrzeugs unverändert bleibt;
im Schritt b der Schritt der Steuerung der Drehzahl des P2-Elektromotors (3) und der Drehzahl des Motors (1), die synchronisiert werden sollen, durch die Steuereinheit des Elektromotors P2 (8) und die Steuereinheit des AT-Getriebes (7) umfasst:
Senden eines Drehmomentbedarfssignals der K0-Kupplung (2) durch die Fahrzeugsteuereinheit an die AT-Getriebesteuereinheit (7) und Senden eines Drehmomentbedarfs des Elektromotors an die P2-Elektromotor-steuereinheit (8);
Steuern, durch die AT-Getriebesteuereinheit (7) entsprechend dem empfangenen Drehmomentbedarfssignal der K0-Kupplung (2), des Drehmoments der K0-Kupplung (2) derart, dass es mit dem Drehmomentbedarf der K0-Kupplung (2) ansteigt, und einen tatsächlichen Drehmomentwert der K0-Kupplung (2) an die Fahrzeugsteuereinheit rückmeldet;
Steuern, durch die P2-Elektromotorsteuereinheit (8) entsprechend dem empfangenen Drehmomentbedarfssignal des Elektromotors, des Drehmoments des P2-Elektromotors (3) derart, dass es mit dem Drehmomentbedarf des P2-Elektromotors (3) ansteigt, um das Drehmoment der K0-Kupplung (2) zu kompensieren; und
durch den Elektromotor P2 (3), Verzögern des Motors (1) mittels der K0-Kupplung (2), bis die Drehzahl des P2-Elektromotors (3) und die Drehzahl des Motors (1) synchron sind.

2. Verfahren zur Steuerung des Starts eines Motors nach Anspruch 1, **dadurch gekennzeichnet, dass**
im Schritt a der Schritt der Steuerung des Betriebs der Kraftstoffölpumpe durch die Motorsteuereinheit, um den Öldruck aufzubauen, umfasst:
Senden eines Startvorbereitungsaktivierungsbefehlssignals durch die Fahrzeugsteuereinheit an die Motorsteuereinheit, und Steuern der Brennstoffölpumpe durch die Motorsteuereinheit entsprechend dem empfangenen Startvorbereitungsaktivierungsbefehlssignal, um den Öldruck aufzubauen.

3. Verfahren zur Steuerung des Starts eines Motors nach Anspruch 1, **dadurch gekennzeichnet, dass**
im Schritt a der Schritt der Steuerung des Öffnens der Überbrückungskupplung (4) durch die AT-Getriebesteuereinheit (7) umfasst:
Senden des Startvorbereitungsaktivierungsbefehlssignals durch die Fahrzeugsteuereinheit an die AT-Getriebesteuereinheit (7);
Senden eines Öffnungszustandsanforderungssignals der Überbrückungskupplung (4) durch die Fahrzeugsteuereinheit an die AT-Getriebesteuereinheit (7);
Steuern, durch die AT-Getriebesteuereinheit (7) entsprechend dem empfangenen Startvorbereitungsaktivierungsbefehlssignal und dem Öffnungszustandsanforderungssignal der Überbrückungskupplung (4), des Öffnens der Überbrückungskupplung (4).

4. Verfahren zur Steuerung des Starts eines Motors nach Anspruch 3, **dadurch gekennzeichnet, dass**
im Schritt a, nach dem Öffnen der Überbrückungskupplung (4), der Schritt des durch die AT-Getriebesteuereinheit (7) erfolgenden Steuerns des Eintritts der K0-Kupplung (2) in den Drehmomentsteuerzustand umfasst:
Senden eines Drehmomentsteuerungsbedarfssignals der K0-Kupplung (2) durch die Fahrzeugsteuereinheit und eines Null-Drehmomentbedarfssignals der K0-Kupplung (2) an die AT-Getriebesteuereinheit (7); und
Steuern, durch die AT-Getriebesteuereinheit (7) entsprechend dem empfangenen Drehmomentsteuerungsbedarfssignal der K0-Kupplung (2), der K0-Kupplung (2) derart, dass sie mit Öl vorgefüllt wird, und nachdem die K0-Kupplung (2) mit Öl vorgefüllt ist, Steuern der K0-Kupplung (2) derart, dass sie in den Drehmomentsteuerungszustand eintritt.

5. Verfahren zur Steuerung des Starts eines Motors nach Anspruch 1, **dadurch gekennzeichnet, dass** das Verfahren ferner den folgenden Schritt aufweist:
wenn die Überbrückungskupplung (4) geöffnet wird, Steuern, durch die Fahrzeugsteuereinheit, der Drehzahl des Elektromotors P2 (3) derart, dass sie nicht größer ist als die Drehzahl einer Turbine in einem hydraulischen Drehmomentwandler (5).

6. Verfahren zur Steuerung des Starts eines Motors nach Anspruch 1, **dadurch gekennzeichnet, dass** das Verfahren ferner den folgenden Schritt aufweist:
wenn der P2-Elektromotor (3) den Motor (1) mittels der K0-Kupplung (2) verzögert, unter der Bedingung, dass der P2-Elektromotor (3) die Drehzahl des Motors (1) auf einen voreingestellten Drehzahlschwellwert zieht, Verringern des Drehmomentbedarfs des P2-Elektromotors (3) auf 0 Nm gemäß einem voreingestellten Steigungsschwellwert.

7. Verfahren zur Steuerung des Starts eines Motors nach Anspruch 1, **dadurch gekennzeichnet, dass**
im Schritt b der Schritt der Steuerung des Schließens der K0-Kupplung (2) durch die AT-Getriebesteuereinheit (7) umfasst:
wenn die Drehzahl des P2-Elektromotors (3) und die Drehzahl des Motors (1) synchron sind, Senden eines Schließanforderungssignals der K0-Kupplung (2) durch die Fahrzeugsteuereinheit an die AT-Getriebesteuereinheit (7); und
Steuern, durch die AT-Getriebesteuereinheit (7) entsprechend dem empfangenen Schließanforderungssignal der K0-Kupplung (2), des Schließens der K0-Kupplung (2), und Rückmelden eines tatsächlichen Schließzustandswerts der K0-Kupplung (2) an die Fahrzeugsteuereinheit.

8. Verfahren zur Steuerung des Starts eines Motors nach Anspruch 7, **dadurch gekennzeichnet, dass**
im Schritt b, nachdem die K0-Kupplung (2) geschlossen ist, der Schritt, dass die Motorsteuereinheit das Zünden des Motors (1) steuert, und dass die Motordrehmomentarchitektur aktiviert wird, umfasst:
Senden, durch die Fahrzeugsteuereinheit, entsprechend dem empfangenen tatsächlichen Schließzustandssignal der K0-Kupplung (2), eines Motorstartaktivierungsbefehlssignals an die Motorsteuereinheit; und
Steuern, durch die Motorsteuereinheit entsprechend dem empfangenen Motorstartaktivierungsbefehlssignal, der Zündung des Motors (1) und Aktivieren der Motordrehmomentarchitektur.

9. Verfahren zur Steuerung des Starts eines Motors nach Anspruch 1, **dadurch gekennzeichnet, dass** das Verfahren ferner den folgenden Schritt aufweist:
im Schritt c, nachdem die Motordrehmomentarchitektur aktiviert ist, das Aktivierungssignal für die Startvorbereitung und das Motorstartaktivierungssignal durch die Fahrzeugsteuereinheit zurückgesetzt werden.

10. Verfahren zur Steuerung des Starts eines Motors nach Anspruch 1, **dadurch gekennzeichnet, dass**
im Schritt c der Schritt der durch die AT-Getriebesteuereinheit (7) erfolgenden Steuerung des Schließens der Überbrückungskupplung (4) gemäß dem Signal der Fahrzeugsteuereinheit umfasst:
nach dem Aktivieren der Motordrehmomentarchitektur, Senden eines Kein-Bedarf-Zustandsanforderungssignals der Überbrückungskupplung (4) durch die Fahrzeugsteuereinheit an die AT-Getriebesteuereinheit (7);
Steuern, durch die AT-Getriebesteuereinheit (7), des Schließens der Überbrückungskupplung (4) nach dem Empfang des Kein-Bedarf-Zustandsanforderungssignals der Überbrückungskupplung (4).

11. Verfahren zur Steuerung des Starts eines Motors nach einem der Ansprüche 1 bis 10, **dadurch gekennzeichnet, dass** das Verfahren ferner den folgenden Schritt aufweist:
Steuern, durch die AT-Getriebesteuereinheit (7), des Schließens der Überbrückungskupplung (4) gemäß einer Überbrückungsleitung der Überbrückungskupplung.

12. Motorsteuereinheit, **dadurch gekennzeichnet, dass** sie aufweist:
einen Prozessor, einen Speicher und ein Computerprogramm, das in dem Speicher gespeichert und in dem Prozessor ausführbar ist; und
wenn das Computerprogramm von dem Prozessor ausgeführt wird, das Motorsteuergerät das Verfahren zur Steuerung des Starts des Motors nach einem der Ansprüche 1-11 implementiert.

13. Computerlesbares Speichermedium, in dem ein Computerprogramm gespeichert ist, **dadurch gekennzeichnet, dass**
das Computerprogramm, wenn es von einem Prozessor ausgeführt wird, das Verfahren zur Steuerung des Starts des Motors nach einem der Ansprüche 1-11 implementiert.

## Revendications

1. Procédé de commande de démarrage d'un moteur à combustion, dans lequel
le procédé de commande de démarrage du moteur à combustion est configuré pour commander un démarrage du moteur à combustion (1) lors d'un processus de récupération d'énergie d'un véhicule à puissance hybride d'architecture P2, et le procédé de commande de démarrage du moteur à combustion est **caractérisé en ce qu'**il comprend les étapes consistant à :
étape a : commander, conformément à un signal d'activation de préparation de démarrage d'une unité de commande de véhicule, par une unité de commande de moteur à combustion, une pompe à gasoil pour qu'elle fonctionne de façon à établir une pression d'huile, commander, par un programme de stabilité électronique de carrosserie, une augmentation de la pression de freinage pour amener une décélération de véhicule à ne pas être modifiée et commander, par une unité de commande de boîte de vitesses AT, un embrayage à verrouillage (4) pour qu'il s'ouvre et un embrayage K0 (2) pour qu'il entre dans un état de commande de couple ;
étape b : commander, conformément à un signal de demande de couple de l'unité de commande de véhicule, par une unité de commande de moteur électrique P2 (8) et par l'unité de commande de boîte de vitesses AT (7), une vitesse de rotation d'un moteur électrique P2 (3) et une vitesse de rotation du moteur à combustion (1) à synchroniser, et après un passage à l'état synchrone de la vitesse de rotation du moteur électrique P2 (3) et de la vitesse de rotation du moteur à combustion (1), commander, par l'unité de commande de boîte de vitesses AT (7), l'embrayage K0 (2) pour qu'il se ferme et commander, par l'unité de commande de moteur à combustion, conformément à un signal d'activation de démarrage de moteur à combustion de l'unité de commande de véhicule, le moteur à combustion (1) pour qu'il démarre, et activer une architecture de couple de moteur à combustion ; et
étape c : augmenter, par l'unité de commande de véhicule, une demande de couple du moteur à combustion (1) conformément à une demande de couple d'un conducteur, et réduire une demande de couple du moteur électrique P2 (3) conformément à un couple courant du moteur à combustion (1) et commander, par l'unité de commande de boîte de vitesses AT (7), l'embrayage à verrouillage (4) pour qu'il se ferme conformément à un signal de l'unité de commande de véhicule,
dans lequel
à l'étape a, l'étape de commande, par le programme de stabilité électronique de carrosserie, d'augmentation de la pression de freinage pour amener la décélération de véhicule à ne pas être modifiée consiste à :
augmenter, par l'unité de commande de véhicule, une demande de couple de récupération du moteur électrique P2 (3) à 0 Nm, et envoyer un signal de demande de couple de compensation hydraulique au programme de stabilité électronique de carrosserie ; et
commander, par le programme de stabilité électronique de carrosserie, conformément au signal de demande de couple de compensation hydraulique reçu, une augmentation de l'hydraulique de freinage pour garantir le fait que la décélération de véhicule ne soit pas modifiée ;
à l'étape b, l'étape de commande, par l'unité de commande de moteur électrique P2 (8) et par l'unité de commande de boîte de vitesses AT (7), de la vitesse de rotation du moteur électrique P2 (3) et de la vitesse de rotation du moteur à combustion (1) pour les amener dans un état synchrone, consiste à :
envoyer, par l'unité de commande de véhicule, un signal de demande de couple de l'embrayage K0 (2) à l'unité de commande de boîte de vitesses AT (7), et envoyer une demande de couple du moteur électrique à l'unité de commande de moteur électrique P2 (8) ;
commander, par l'unité de commande de boîte de vitesses AT (7), conformément au signal de demande de couple reçu de l'embrayage K0 (2), le couple de l'embrayage K0 (2) pour une augmentation avec la demande de couple de l'embrayage K0 (2), et envoyer en retour une valeur de couple courant de l'embrayage K0 (2) à l'unité de commande de véhicule ;
commander, par l'unité de commande de moteur électrique P2 (8), conformément au signal de demande de couple reçu du moteur électrique, le couple du moteur électrique P2 (3) pour une augmentation avec la demande de couple du moteur électrique P2 (3) de façon à compenser le couple de l'embrayage K0 (2) ; et
ralentir, par le moteur électrique P2 (3), le moteur à combustion (1) au moyen de l'embrayage K0 (2) jusqu'à ce que la vitesse de rotation du moteur électrique P2 (3) et la vitesse de rotation du moteur à combustion (1) soient synchrones.

2. Procédé de commande de démarrage du moteur à combustion selon la revendication 1, **caractérisé en ce que**,
à l'étape a, l'étape de commande, par l'unité de commande de moteur à combustion, de la pompe à gasoil pour qu'elle fonctionne de façon à établir la pression d'huile consiste à :
envoyer, par l'unité de commande de véhicule, un signal d'instruction d'activation de préparation de démarrage à l'unité de commande de moteur à combustion et commander, par l'unité de commande de moteur à combustion, conformément au signal d'instruction d'activation de préparation de démarrage reçu, la pompe à gasoil pour qu'elle fonctionne de façon à établir la pression d'huile.

3. Procédé de commande de démarrage du moteur à combustion selon la revendication 1, **caractérisé en ce que**,
à l'étape a, l'étape de commande, par l'unité de commande de boîte de vitesses AT (7), de l'embrayage à verrouillage (4) pour qu'il s'ouvre consiste à :
envoyer, par l'unité de commande de véhicule, le signal d'instruction d'activation de préparation de démarrage à l'unité de commande de boîte de vitesses AT (7) ;
envoyer, par l'unité de commande de véhicule, un signal de demande d'état d'ouverture de l'embrayage à verrouillage (4) à l'unité de commande de boîte de vitesses AT (7) ;
commander, par l'unité de commande de boîte de vitesses AT (7), conformément au signal d'instruction d'activation de préparation de démarrage reçu et au signal de demande d'état d'ouverture de l'embrayage à verrouillage (4), l'embrayage à verrouillage (4) pour qu'il s'ouvre.

4. Procédé de commande de démarrage du moteur à combustion selon la revendication 3, **caractérisé en ce que**,
à l'étape a, après l'ouverture de l'embrayage à verrouillage (4), l'étape de commande, par l'unité de commande de boîte de vitesses AT (7), de l'embrayage K0 (2) pour qu'il entre dans l'état de commande de couple consiste à :
envoyer, par l'unité de commande de véhicule, un signal de demande de commande de couple de l'embrayage K0 (2) et un signal de demande de couple nul de l'embrayage K0 (2) à l'unité de commande de boîte de vitesses AT (7) ; et
commander, par l'unité de commande de boîte de vitesses AT (7), conformément au signal de demande de commande de couple reçu, l'embrayage K0 (2) de façon à assurer un remplissage préalable d'huile, et après le remplissage préalable d'huile de l'embrayage à verrouillage K0 (2), commander l'embrayage K0 (2) pour qu'il entre dans l'état de commande de couple.

5. Procédé de commande de démarrage du moteur à combustion selon la revendication 1, **caractérisé en ce que** le procédé comprend en outre l'étape consistant à :
commander, lorsque l'embrayage à verrouillage (4) est ouvert, par l'unité de commande de véhicule, la vitesse de rotation du moteur électrique P2 (3) pour qu'elle ne soit pas supérieure à une vitesse de rotation d'une turbine située à l'intérieur d'un convertisseur de couple hydraulique (5).

6. Procédé de commande de démarrage du moteur à combustion selon la revendication 1, **caractérisé en ce que** le procédé comprend en outre l'étape consistant à :
réduire, lorsque le moteur électrique P2 (3) ralentit le moteur à combustion (1) au moyen de l'embrayage K0 (2), à condition que le moteur électrique P2 (3) ralentisse la vitesse de rotation du moteur à combustion (1) à un seuil de vitesse de rotation prédéfini, la demande de couple du moteur électrique P2 (3) à 0 Nm conformément à un seuil de pente prédéfini.

7. Procédé de commande de démarrage du moteur à combustion selon la revendication 1, **caractérisé en ce que**,
à l'étape b, l'étape de commande, par l'unité de commande de boîte de vitesses AT (7), de l'embrayage K0 (2) pour qu'il se ferme consiste à :
envoyer, lorsque la vitesse de rotation du moteur électrique P2 (3) et la vitesse de rotation du moteur à combustion (1) sont synchrones, par l'unité de commande de véhicule, un signal de demande de fermeture de l'embrayage K0 (2) à l'unité de commande de boîte de vitesses AT (7) ; et
commander, par l'unité de commande de boîte de vitesses AT (7), conformément au signal de demande de fermeture reçu de l'embrayage K0 (2), l'embrayage K0 (2) pour qu'il se ferme, et envoyer en retour un signal d'état de fermeture courant de l'embrayage K0 (2) à l'unité de commande de véhicule.

8. Procédé de commande de démarrage du moteur à combustion selon la revendication 7, **caractérisé en ce que**,
à l'étape b, après la fermeture de l'embrayage K0 (2), l'étape de commande, par l'unité de commande de moteur à combustion, du moteur à combustion (1) pour qu'il démarre, et d'activation de l'architecture de couple de moteur à combustion, consiste à :
envoyer, par l'unité de commande de véhicule, conformément au signal d'état de fermeture courant reçu de l'embrayage K0 (2), un signal d'instruction d'activation de démarrage de moteur à combustion à l'unité de commande de moteur à combustion ; et
commander, par l'unité de commande de moteur à combustion, conformément au signal d'instruction d'activation de démarrage de moteur à combustion reçu, le moteur à combustion (1) pour qu'il démarre, et activer l'architecture de couple de moteur à combustion.

9. Procédé de commande de démarrage du moteur à combustion selon la revendication 1, **caractérisé en ce que** le procédé comprend en outre l'étape consistant à :
à l'étape c, restaurer, après l'activation de l'architecture de couple de moteur à combustion, par l'unité de commande de véhicule, le signal d'activation de préparation de démarrage et le signal d'activation de démarrage de moteur à combustion.

10. Procédé de commande de démarrage du moteur à combustion selon la revendication 1, **caractérisé en ce que**,
à l'étape c, l'étape de commande, par l'unité de commande de boîte de vitesses AT (7), de l'embrayage à verrouillage (4) pour qu'il se ferme conformément au signal de l'unité de commande de véhicule consiste à :
envoyer, après l'activation de l'architecture de couple de moteur à combustion, par l'unité de commande de véhicule, un signal de demande d'état sans demande de l'embrayage à verrouillage (4) à l'unité de commande de boîte de vitesses AT (7) ; et
commander, par l'unité de commande de boîte de vitesses AT (7), l'embrayage à verrouillage (4) pour qu'il se ferme après la réception du signal de demande d'état sans demande de l'embrayage à verrouillage (4).

11. Procédé de commande de démarrage du moteur à combustion selon l'une quelconque des revendications 1 à 10, **caractérisé en ce que** le procédé comprend en outre l'étape consistant à :
commander, par l'unité de commande de boîte de vitesses AT (7), l'embrayage à verrouillage (4) pour qu'il se ferme conformément à une ligne de verrouillage de l'embrayage à verrouillage.

12. Unité de commande de moteur à combustion, **caractérisée en ce qu'**elle comprend
un processeur, une mémoire et un programme informatique qui est mémorisé dans la mémoire et qui est exécutable par le processeur ; et
lorsque le programme informatique est exécuté par le processeur, l'unité de commande de moteur à combustion met en œuvre le procédé de commande de démarrage du moteur à combustion selon l'une quelconque des revendications 1 à 11.

13. Support d'informations lisible par ordinateur dans lequel est mémorisé un programme informatique, **caractérisé en ce que**,
le programme informatique, lorsqu'il est exécuté par un processeur, met en œuvre le procédé de commande de démarrage du moteur à combustion selon l'une quelconque des revendications 1 à 11.
